# EUROPÄISCHE PATENTSCHRIFT

(11) **EP 1 438 890 B1**
(45) Veröffentlichungstag und Bekanntmachung des Hinweises auf die Patenterteilung: **07.06.2006**
(21) Anmeldenummer: 04000380.8
(22) Anmeldetag: 10.01.2004
(51) Int. Cl.: A01F 15/14, B30B 9/30, B65B 27/12

(54) **Garnspanneinrichtung und Grossballenpresse**
Twine tensioning device and baler for big bales
Dispositif de tension de fil et presse à grandes balles

(30) Priorität: 15.01.2003 US 345471
(43) Veröffentlichungstag der Anmeldung: 21.07.2004
(73) Patentinhaber: DEERE & COMPANY, Moline, Illinois 61265-8098 (US)
(72) Erfinder: Rotole, David Vincent, Ottumwa IA 52501 (US)
(74) Vertreter: Magin, Ludwig Bernhard

(56) Entgegenhaltungen:
- EP-A- 0 252 456
- US-A- 2 894 617
- US-A- 5 988 053
- US-A1- 2002 046 552

## Beschreibung

Die Erfindung betrifft eine Garnspanneinrichtung einer Ballenpresse mit wenigstens einem Paar gerippter Rollen, wobei eine erste Rolle derart beweglich vorgesehen ist, dass sich ihr axialer Abstand zu der zweiten Rolle verändern kann, und mit einer Federanordnung, welche an die erste Rolle eine Kraft anlegt, die einer Vergrößerung des Abstands zwischen der ersten Rolle und der zweiten Rolle entgegenwirkt, sowie eine Ballenpresse, insbesondere eine Großballenpresse mit einer solchen Garnspanneinrichtung.

An Ballenpressen, insbesondere an Großballenpressen, wird oftmals Garn verwendet, um die erzeugten Ballen zu binden. Üblicherweise werden Garnvorratsrollen an der Ballenpresse zur Verfügung gestellt, wobei ein Garnende einer ersten Rolle mit einem Garnende einer folgenden Rolle durch ein Verknoten verbunden wird. Entlang des Garnpfades sind ein oder mehrere Garnspanner angeordnet, welche eine Kontrolle des Garns unterstützen, wenn dieses von den Vorratsrollen abgezogen wird. Wenn der Knoten durch bekannte Garnspanner gelangt, erzeugt er dort eine Behinderung, welche eine sehr große Spannung bewirkt. Übliche Garnspanner erlauben es dem Knoten nicht, durch das System zu gelangen, ohne eine enorme Erhöhung der Spannung zu bewirken, welche zu Beschädigungen, einem erhöhten Verschleiß und/oder einem Reißen des Garns führen kann.

US-A-5,998,053 zeigt einen bekannten Garnspanner bei dem die Spannung direkt proportional zu der Kraft einer Feder oder mehrere Federn ist, welche ein Paar gerippter bzw. gezahnter Rollen aneinander drücken, um an dem Garn, das zwischen den Rollen verläuft, anzugreifen. Mit anderen Worten führt eine Vergrößerung des Abstandes der Zentren der Rollen bewirkt durch das Garn oder einen Knoten einen direkten proportionalen Anstieg der Garnspannung. Um Garn manuell zwischen die Rollen einzuführen, ist es notwendig, die Rollen auseinanderzudrücken, wozu häufig ein Schraubenzieher, eine Zange oder anderes Werkzeug erforderlich ist.

Das der Erfindung zugrunde liegende Problem wird darin gesehen, dass bekannte Garnspanner in Abhängigkeit von dem Durchmesser des Garns bzw. dem Vorliegen einer Verdickung oder eines Knotens eine zu große Garnspannung hervorrufen. Darüber hinaus ist ein Einführen des Garns zwischen die gerippten bzw. umfangsmäßig verzahnten Rollen bekannter Garnspanner aufwändig.

Dieses Problem wird erfindungsgemäß durch die Lehre der Patentansprüche 1 bzw. 8 gelöst, wobei in den weiteren Patentansprüchen die Lösung in vorteilhafter Weise weiterentwickelnde Merkmale aufgeführt sind.

Auf diese Weise wird eine Garnspanneinrichtung für eine Ballenpresse zur Verfügung gestellt, welche zwei gerippte, d.h. umfangsmäßig mit Querrippen versehene bzw. gezahnte Rollen aufweist, die gegeneinander vorgespannt sind und welche es einem Knoten erlauben, zwischen ihnen hindurchzugelangen, ohne einen dramatischen Anstieg der Garnspannung hervorzurufen.

Darüber hinaus weist die Garnspanneinrichtung ein Kurven-Kurvenfolger-Design auf, welches auch bei unterschiedlichen Garndicken eine zumindest im Wesentlichen konstante Spannung zur Verfügung stellt, da es bei einer Vergrößerung des Abstandes der Rollenzentren keinen direkt proportionalen Anstieg der Garnspannung hervorruft. Dies wird dadurch erreicht, dass die Kurve und eine die Rollen belastende Feder in einem derartigen Verhältnis stehen, welches ihre Wirkung in einem Bewegungsbereich, welcher üblicherweise durch bewegliche Rollen erfahren wird, zumindest im Wesentlichen aufhebt.

Die gerippten bzw. gezahnten Rollen sind vorzugsweise derart ausgebildet, dass nur eine der Rollen bezogen auf die zweite Rolle beweglich angebracht ist und von der festen Rolle mit einem geringen Kraftaufwand und ohne eine Verwendung eines Werkzeugs von der anderen entfernt werden kann, um ein Einführen von Garn in die Garnspanneinrichtung zu ermöglichen. Dies wird dadurch erreicht, dass ein Griff an inneren Rollenplatten angebracht ist, zwischen denen die erste Rolle vorgesehen ist, wobei ihre Achse sich durch kurvenförmige Schlitze in entsprechenden äußeren Platten erstreckt. Der Griff dient dazu die Kraft einer Feder zu überwinden und die Welle bzw. Achse der ersten Rolle entlang der kurvenförmigen Schlitze zu bewegen, um eine möglichst große Beabstandung der Rollen zu verursachen, um das Garn in einen Spalt zwischen den Rollen einführen zu können.

Derartige Garnspanneinrichtungen werden an Ballenpressen eingesetzt. Bei derartigen Ballenpressen handelt es sich um Pressen zur Erzeugung von quaderförmigem Ballen beispielsweise von Abfall, Stoff oder Papier etc. und insbesondere von landwirtschaftlichem Erntegut. Derartige Ballenpressen können Ballenpressen unterschiedlicher Größe darstellen, insbesondere handelt es sich aber um landwirtschaftliche Großballenpressen.

In der Zeichnung ist ein nachfolgend näher beschriebenes Ausführungsbeispiel der Erfindung dargestellt. Es zeigt:
- Fig. 1: eine perspektivische Darstellung einer Ballenpresse in der Art einer Großballenpresse, welche eine erfindungsgemäße Garnspanneinrichtung aufweist,
- Fig. 2: eine vergrößerte Darstellung der Garnspanneinrichtung aus Fig. 1,
- Fig. 3: eine Ansicht eines Garnspanners einer Garnspanneinrichtung gemäß Fig. 2 von links vorne betrachtet,
- Fig. 4: eine perspektivische Ansicht des Garnspanners aus Fig. 3 von rückwärts betrachtet, wobei eine linke Platte entfernt wurde,
- Fig. 5: eine teilweise Explosionsdarstellung einer Anordnung gemäß Fig. 4 und
- Fig. 6: eine perspektivische Darstellung der Garnspanneinrichtung mit einer Konsole, an der ein Spannungssteuerarm vorgesehen ist.

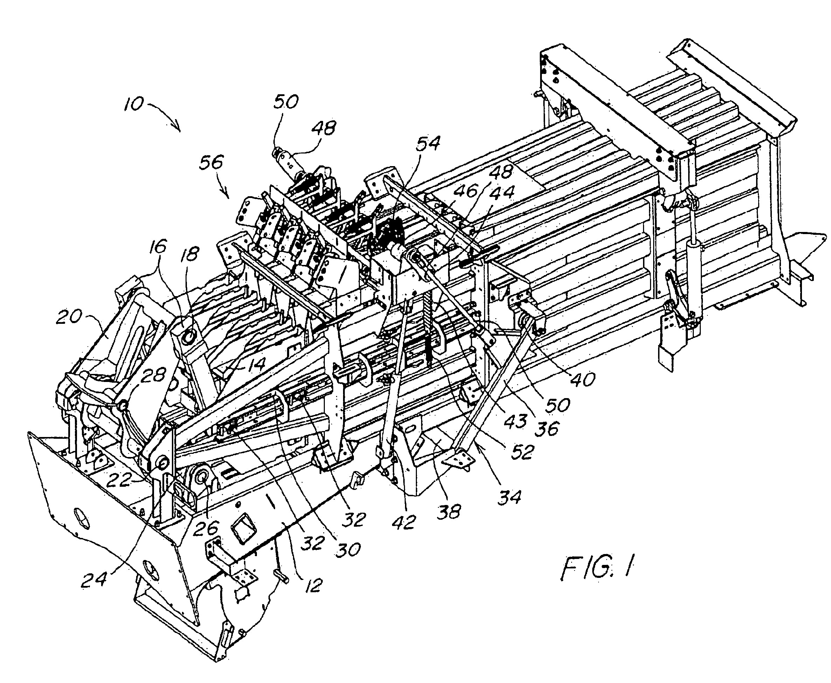

Es wird nun Bezug auf Figur 1 genommen, die eine Presskammer 10 einer großen Quaderpresse zeigt. Diese Presskammer 10 weist einen Rahmen 12 auf, welcher einen Kolben 14 trägt, mit welchem ein Antriebsgestänge mit einem Paar von Verbindungsarmen 16 verbunden ist, welche erste Endbereiche aufweisen, die an einer Verbindungsstelle 18 mit einem Endbereich eines gegabelten Kurbelarms 20 verbunden sind, dessen zweiter Endbereich mit dem Rahmen 12 mittels eines Bolzens 22 schwenkbar verbunden ist. Es ist ein aus- und einfahrbarer, hydraulischer Motor 24 zum Antrieb des Kolbens 14 vorgesehen, welcher einen unteren Endbereich aufweist, der an dem Rahmen 12 über eine einen Verbindungsbolzen 26 aufweisende Struktur verankert ist, die einen oberen Endbereich aufweist, der mit dem Kurbelarm 20 durch einen Bolzen 28 verbunden ist. An jeder Seite des Rahmens 12 ist eine Leitanordnung 30 vorgesehen und jeder der gegenüberliegenden Seitenbereiche des Kolbens 14 ist mit einem Paar von Laufrollen 32 versehen, die angebracht sind, um sich entlang einer entsprechenden Leitanordnung 30 zu bewegen.

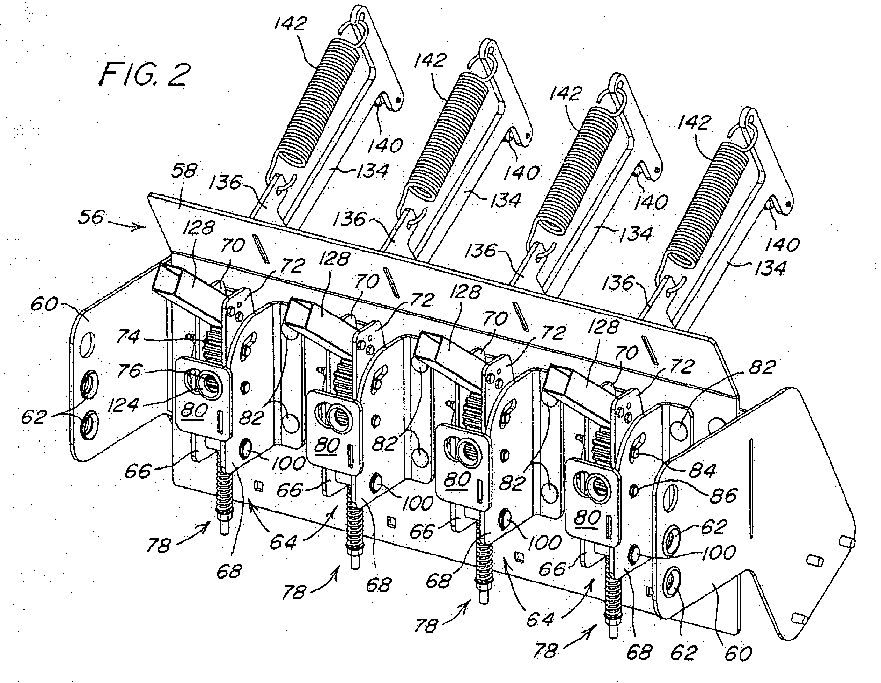

Ein U-förmiger Nadelträger bzw. Bügel 34 weist ein Paar gegenüberliegender Arme 36 (nur einer ist sichtbar) auf, welche mit einem Querrohr 38 verbunden sind, das sich quer unterhalb des Rahmens 12 erstreckt. An beabstandeten Stellen entlang des Querrohres 38 ist eine Mehrzahl von Garnzufuhrnadeln (nicht gezeigt) angebracht. Entsprechende Endbereiche der Arme 36, welche dem Querrohr 38 abgelegen sind, sind entsprechend schwenkbar mit gegenüberliegenden Seitenbereichen des Rahmens 12 verbunden, um um gegenüberliegende abstehende Flanschwellen 40 zu schwenken. Eine Bewegung des Bügels 34 wird durch einen Knoterantriebszylinder bzw. einen Knotermotor 42, dessen Gelenkkopf mit einem Endbereich einer Antriebskette (nicht gezeigt) verbunden ist, welche in Zähne eines Knoterantriebszahnrades (nicht gezeigt) eingreift, das mit einer Knoterantriebswelle 44 durch eine Freilaufkupplung 46 verbunden ist. Die Knoterantriebswelle 44 trägt an gegenüberliegenden Endbereichen Kurbelarme 48, welche mit den Armen 36 über Bewegungsübertragungsgestänge 50 verbunden sind. Der gegenüberliegende Endbereich der Antriebskette ist mit einer Spannfeder 52 verbunden, welche an dem Rahmen 12 verankert ist. Eine Anzahl von Knoterritzeln 54, die der Anzahl der von dem Bügel getragenen Nadeln 34 entspricht und von denen nur eines schematisch angedeutet ist, sind mit der Knoterantriebswelle 44 fest verbunden. Eine Rotation der Knoterantriebswelle 44 bewirkt, dass die Knoterritzel 54 die entsprechende Garnknoter bzw. Knoter (nicht gezeigt) antreiben, um eine Garnschlinge um einen in der Presskammer 10 angeordneten fertigen Ballen zu sichern. Auf dem Weg des Garnes, welches zu den Nadeln geliefert wird, ist eine Spanneinrichtung 56 (sieh auch Fig. 2) vorgesehen, welche eine sich quer erstreckende, aufrechte Konsole 58 aufweist, die mit dem oberen Bereich des Rahmens 12 an einer Stelle vor der Knoterantriebswelle 44 verbunden ist. Gegenüberliegende Endbereiche der Konsole 58 werden durch sich vorwärts erstreckende Platten 60 bestimmt, welche jeweils mit drei vertikal beabstandeten Aussparungen versehen sind, wobei die beiden unteren Aussparungen jeder Seite eine Leiteinrichtung 62 in Form eines Ringes tragen, welcher beispielsweise aus einem verschleißfesten, reibungsarmen Kunststoffmaterial hergestellt sein kann. Über die Front der Konsole 58 sind vier identische Garnspanner 64 gleichmäßig beabstandet angeordnet.

Jeder Garnspanner 64 weist rechte und linke, entsprechende quer beabstandete, vertikal angebrachte Befestigungsplatten 66 und 68, ein Paar identischer, rechter und linker Rollenplatten 70 und 72, identische obere und untere gerippte bzw. gezahnte Scheiben oder Rollen 74 und 76, eine die Rollen belastende Federanordnung 78 und eine Leiteinrichtungsbefestigungsplatte 80 auf.

Die Befestigungsplatten 66 und 68 sind voneinander quer beabstandet und weisen entsprechende parallele, ebene, sich in Längsrichtung erstreckende Bereiche auf, welche mit entsprechenden quer angebrachten Flanschen verbunden sind, die an der Konsole 58 durch vertikal beabstandete Schrauben 82 angebracht sind. Die Rollenplatten 70 und 72 sind entsprechend an Innenflächen der Befestigungsplatten 66 und 68 vorgesehen. Die oberen und unteren gezahnten Rollen 74 und 76 sind zwischen den Rollenplatten 70 und 72 vorgesehen. In die oberen und unteren Rollen 74 und 76 sind entsprechende obere und untere Wellen bzw. Achsen 84 und 86 integriert.

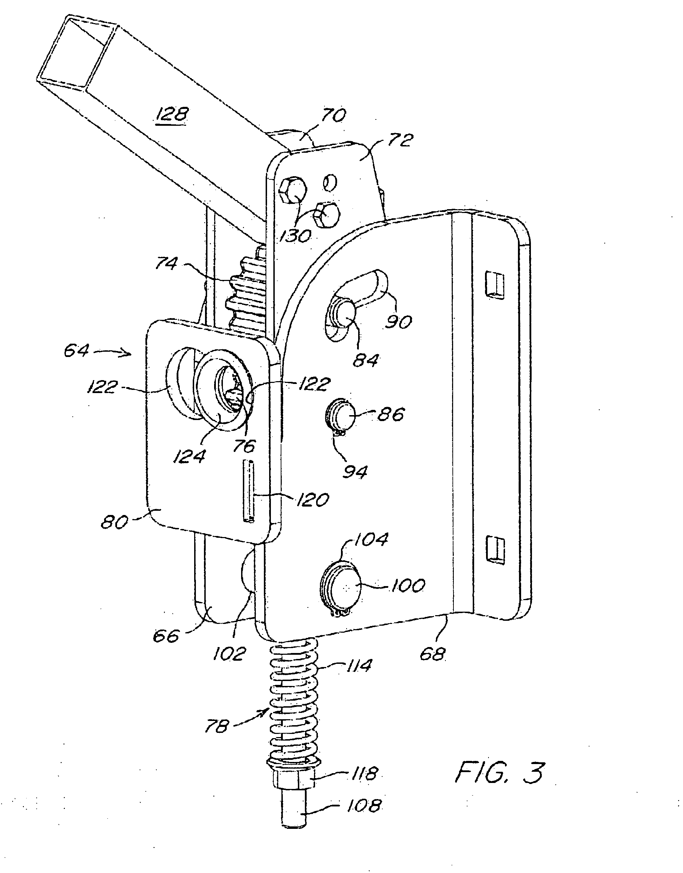

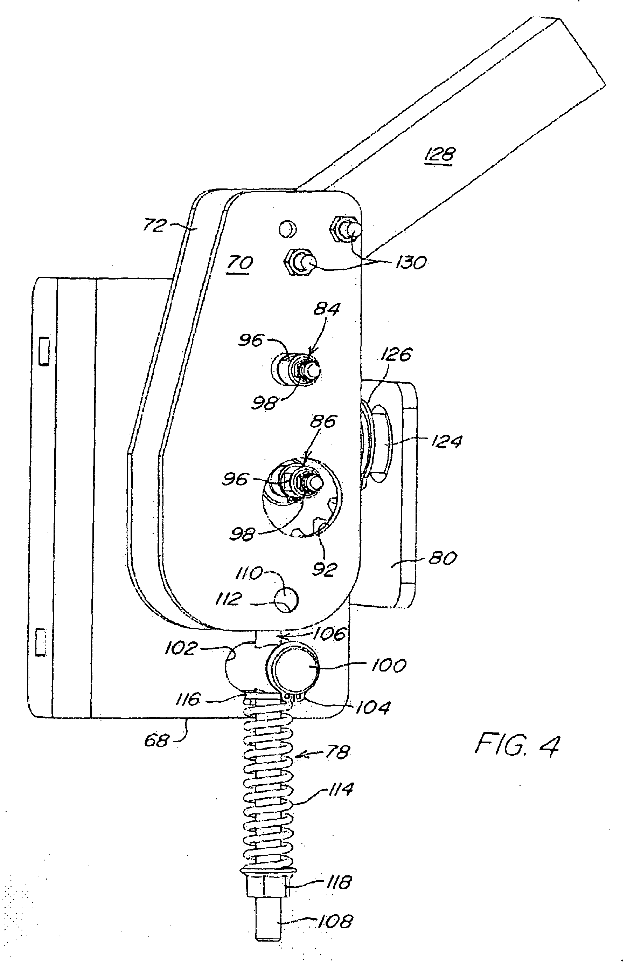

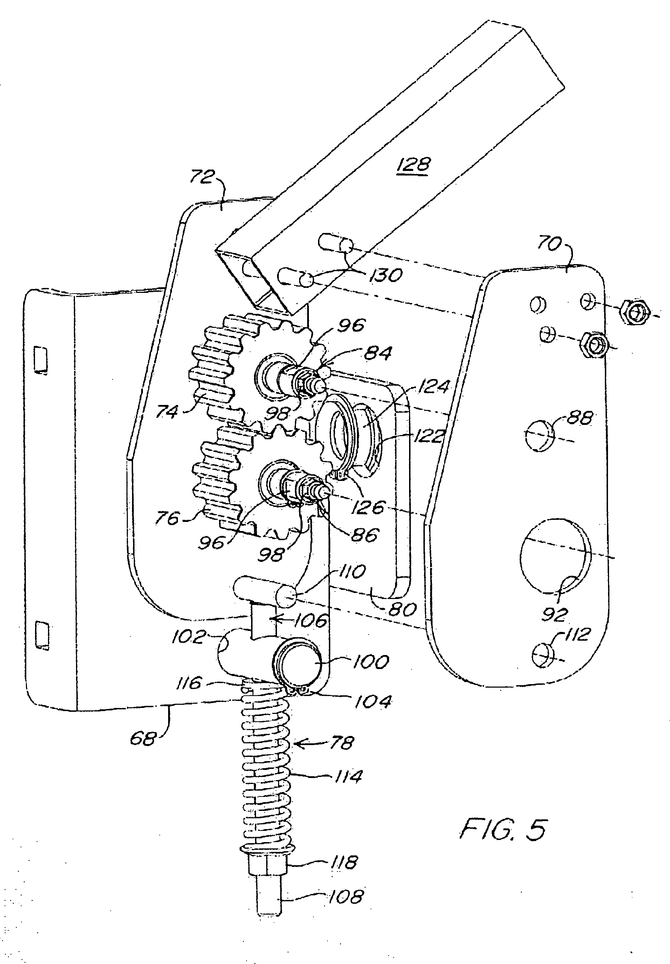

Es wird nun auch auf die Figuren 3 - 5 Bezug genommen, denen entnommen werden kann, dass die rechten und linken Endbereiche der oberen Achse bzw. Welle 84 entsprechend in runden Aussparungen 88, welche in den Rollenplatten 70 und 72 vorgesehen sind, und in Nocken- oder Leitschlitzen 90, aufgenommen werden, welche in den Platten 66 und 68 vorgesehen sind. Die Leitschlitze 90 weisen einen kurzen, im Wesentlichen vertikalen vorderen Endbereich auf, der mit einem wesentlich längeren allmählich nach oben und rückwärts ansteigenden Bereich verbunden ist. Die untere Achse bzw. Welle 86 weist gegenüberliegende Endbereiche auf, welche sich entsprechend durch Aussparungen 92 erstrecken, die in den Rollenplatten 70 und 72 an Stellen vorgesehen sind, die hinter und unter den runden Aussparungen 88 zentriert angeordnet sind, wobei die Endbereiche der unteren Achsen bzw. Wellen 86 entsprechend in runden Aussparungen (nicht gezeigt) in den Befestigungsplatten 66 und 68 aufgenommen werden. In umlaufenden Nuten in den gegenüberliegenden Endbereichen der Wellen bzw. Achsen 84 und 86 sind Sicherungsringe 94 angeordnet, um die axiale Position der Wellen bzw. Achsen 84, 86 festzulegen. Rechte Endbereiche der Wellen bzw. Achsen 84 und 86 sind jeweils mit diametral gegenüberliegenden Abflachungen 96 und hexagonale Oberflächen 98 versehen, um in ein entsprechendes Werkzeug einzugreifen, wenn es gewünscht ist, die Rollen 74 oder 76 manuell zu drehen.

Die Federanordnung 78 ist vorgesehen, um einer Bewegung der Rollenplatten 70 und 72 nach oben und damit einer nach oben gerichteten Bewegung der Rolle 74 nachgiebig entgegenzuwirken. Aus diesem Grund weist die Federanordnung 78 eine quer angeordnete Tragwelle 100 mit gegenüberliegenden Endbereichen auf, welche entsprechend in runden Aussparungen 102 schwenkbar aufgenommen werden, welche in den Befestigungsplatten 66 und 68 an entsprechenden Stellen unterhalb der unteren Kanten der Rollenplatten 70 und 72 und leicht hinter der unteren Rollenwelle 86 angeordnet sind. Die Tragwelle 100 wird durch Sicherungsringe 104 axial fixiert, welche in entsprechenden Nuten in gegenüberliegenden Endbereichen der Tragwelle 100 angrenzend an Außenflächen der Befestigungsplatten 66 und 68 vorgesehen sind. Ein T-Bolzen 106 weist einen Schaft 108, der sich nach unten durch eine Querbohrung, welche in der Tragwelle 100 vorgesehen ist, erstreckt und einen Kopf 110 mit gegenüberliegenden Endbereichen auf, die entsprechend in runden Aussparungen 112 angeordnet sind, welche im Wesentlichen unter den Aussparungen 88 in einem unteren Bereich jeder der Rollenplatten 70 und 72 vorgesehen sind. Der Schaft 108 des T-Bolzens 106 nimmt eine Druckfeder 114 zwischen flachen Unterlegscheiben 116, die unter der Tragwelle 100 angeordnet ist, und einer Mutter bzw. einem Sicherungsmittel 118 auf, welches auf einen ein Gewinde aufweisenden Endbereich des Schafts 108 aufgeschraubt ist, um so eine gewünschte Menge an Spannung oder Vorbelastung in der Druckfeder 114 zu erzeugen.

Die Leiteinrichtungsbefestigungsplatte 80 ist rechteckig oder quadratisch ausgebildet und ist quer über den Frontbereich der Garnspanneinrichtung 64 angeordnet, wobei ein Schlitz in einer unteren linken Eckregion der Leiteinrichtungsbefestigungsplatte 80 vorgesehen ist und eine Lasche 120 aufnimmt, die in dem Schlitz festgeschweißt ist. Ein Paar von kreisausschnittförmigen Aussparungen 122, die an ihren Innenseiten verbunden sind, sind in einer oberen Stelle der Leiteinrichtungsbefestigungsplatte 80 vorgesehen, wobei eine runde Garnleiteinrichtung 124 in einer der Aussparungen 122 angebracht ist, und die andere Aussparung zur Nutzung an Ballenpressen zur Verfügung stehen, die Ballen anderer Größe herstellen, wo eine andere Anzahl von Garnschlaufen um den gebildeten Ballen geschlungen wird. Die Garnleiteinrichtung 124 weist einen vorderen Endbereich, der zu groß ist, um durch die Aussparung 122 zu gelangen, und einen Sicherungsring 126 auf, welcher in einer Nut in der Garnleiteinrichtung 124 an einer Stelle gerade hinter der Leiteinrichtungsbefestigungsplatte 80 vorgesehen ist. Die Garnleiteinrichtung 124 ist vorzugsweise aus einem Kunststoffmaterial mit einem geringen Reibwert und mit geringem Verschleiß hergestellt und ist derart angeordnet, dass sie gerade vor dem Spalt liegt, der entsprechend zwischen der unteren und der oberen Rolle 74, 76 bestimmt wird.

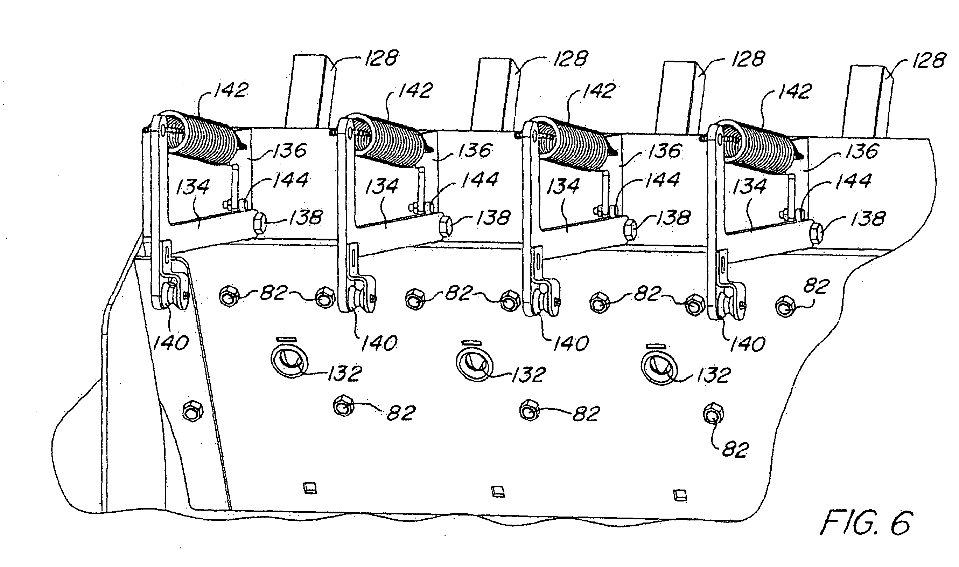

Um ein manuelles Trennen der Rollen 74 und 76 zu unterstützen, um so ein Garnstück zwischen den Rollen 74, 76 einzufädeln, ist ein rückwärtiger Endbereich eines nach oben und nach vorn ansteigenden Griffs 128 zwischen den Rollenplatten 70 und 72 vorgesehen und beispielweise mittels Schrauben 130 an oberen, vorderen Bereichen derselben befestigt. Auf diese Weise wird durch ein manuelles Anlegen einer Hubkraft an dem Griff 128, die Kraft der Druckfeder 114 überwunden und die Rollenplatten 70 und 72 werden dazu gebracht, die obere Welle bzw. Achse 84 entlang des Leitschlitzes 90 zu führen, so dass die obere Rolle 74 von der unteren Rolle 76 weg bewegt wird. Ein Garnstück kann dann durch die Garnleiteinrichtung 124 zwischen den Rollen 74 und 76 und dann durch eine weitere Leiteinrichtung 132 (Fig. 6) in der Konsole 58 eingefädelt werden.

Es wird nun auch auf die Fig. 6 Bezug genommen, in der gezeigt wird, dass hinter der Konsole 58, und jeder der Garnspanneinrichtungen 64 zugeordnet, eine Mehrzahl von sich in Längsrichtung erstreckenden Spannarmen 134 angeordnet sind. Jeder Spannarm 134 ist im Wesentlichen T-förmig, wobei der Schaft des T einen vorderen Endbereich aufweist, der an einem Halter 136 angebracht ist, um vertikal um eine horizontale Quersachse, welche durch Schwenkhalterungen 138 bestimmt wird, zu schwenken. Eine Garnleitrolle 140 ist an einem unteren Endbereich des Kopfes des T angebracht und wird normalerweise durch das Garnstück ergriffen, welches der angrenzenden Leiteinrichtung 132 entspringt. Eine Spiralspannungsfeder 142 weist Haken auf, welche an ihren gegenüberliegenden Endbereichen vorgesehen sind, welche entsprechend in eine Öffnung eingreifen, die an dem oberen Endbereich des Kopfes des T des Spannarms 134 und in einem oberen Endbereich des Halters 136 vorgesehen ist. An dem Halter 136 ist ein Anschlag 144 an einer Stelle vorgesehen, an der er an einer oberen Oberfläche des Schafts des T-förmigen Spannungsarms 134 angreift, um so eine Schwenkbewegung des Spannarms 134 nach oben zu begrenzen. Auf diese Weise wird einer Schwenkbewegung jedes Spannarms 134 durch die Spiralspannungsfeder 142 entgegengewirkt. Während des Vorgangs des Bildens von Garnschlaufen um einen Ballen bewirken die Spiralspannungsfedern 142, dass jeder Überschuss an Schlupf in den Garnschlaufen ausgesteuert wird, so dass die Garnlänge nicht verschmutzt und eine Knoterfehlfunktion bewirkt.

Es wird nun angenommen, dass im Betrieb ein Knoten, der gebunden wird, um zwei Garnvorratsrollen zu verbinden, an einem Garnstück angeordnet ist, welches durch die Garnspanneinrichtung 64 an einer Stelle gerade stromaufwärts des Garnspanners 64 gelangt. Dann, wenn der Knotvorgang mehr Garn erfordert, wird eine Zugkraft auf das Garnstück ausgeübt, um zu bewirken, dass es durch den Spalt zwischen der oberen und der unteren Rolle 74 und 76 gezogen wird. Wenn der Knoten den Spalt erreicht, wird eine zusätzliche Kraft auf die obere Rolle 74 ausgeübt, so dass bewirkt wird, dass diese gegen die Wirkung der Druckfeder 114 angehoben wird. Da die Welle bzw. Achse 84 durch die Leitschlitze 90 beschränkt wird, wird die Rolle 74 sich entlang eines Pfades bewegen, welcher eine entsprechende Form aufweist, wobei diese Form derart ist, dass die Spannkraft, welche auf das Garn ausgeübt wird, um es durch den Spalt zu ziehen, einen nennenswerten Wert nicht überschreitet.

Darüber hinaus soll zur Kenntnis genommen werden, dass die Form der Leitschlitze 90 es auch erlaubt, dass Garne unterschiedlichen Durchmessers mit der Garnspanneinrichtung 64 verwendet werden können, da der Spalt zwischen den Rollen 74 und 76 sich nur auf die benötigte Größe erweitert oder zusammenzieht, ohne eine merkliche Änderung der Kraft zu bewirken, die notwendig ist, um das Garn durch die Garnspanneinrichtung zu ziehen.

Wenn es notwendig wird, das System mit einem neuen Garnstrang zu beschicken, kann dies einfach getan werden, in dem manuell mit einer Hand eine Hubkraft auf den Griff 128 der entsprechenden Garnspanneinrichtung 64 ausgeübt wird, während die andere Hand dazu verwendet wird, das Garn durch die Garnleiteinrichtung 124, den Spalt zwischen den Rollen 74 und 76 und die Leiteinrichtung 132 zu fädeln.

Nach der Beschreibung der bevorzugten Ausführungsform, soll es deutlich geworden sein, dass verschiedene Veränderungen durchgeführt werden können, ohne den Schutzbereich der Erfindung, wie er durch die beiliegenden Ansprüche bestimmt wird, zu verlassen.

## Patentansprüche

1. Garnspanneinrichtung (64) einer Ballenpresse mit wenigstens einem Paar gerippter Rollen (74, 76), wobei eine erste Rolle (74) derart beweglich vorgesehen ist, dass sich ihr axialer Abstand zu der zweiten Rolle (76) verändern kann, und mit einer Federanordnung (78), welche an die erste Rolle (74) eine Kraft anlegt, die einer Vergrößerung des Abstands zwischen der ersten Rolle (74) und der zweiten Rolle (76) entgegenwirkt, **gekennzeichnet durch** eine Anordnung, welche die erste Rolle (74) derart führt, dass eine Vergrößerung des Abstands zwischen der ersten Rolle (74) und der zweiten Rolle (76) keine nennenswerten Veränderung der genannten Kraft bewirkt.

2. Garnspanneinrichtung nach Anspruch 1, **dadurch gekennzeichnet, dass** die Anordnung ortsfester Befestigungsplatten (66, 68) mit beabstandeten parallelen Bereichen mit jeweiligen Leitschlitzen (90) aufweisen, welche Endbereiche einer der ersten Rolle (74) zugeordneten Achse bzw. Welle (84) aufnehme, wobei die Leitschlitze (90) derart ausgebildet sind, dass sie die Achse bzw. Welle (84) derart führen, dass die erste Rolle (74) sich von der zweiten Rolle (76) wegbewegen kann.

3. Garnspanneinrichtung nach Anspruch 2, **dadurch gekennzeichnet, dass** die erste Rolle (74) zumindest im Wesentlichen vertikal oberhalb der zweiten Rolle (76) angeordnet ist, wenn zwischen den Achsen bzw. Wellen (84, 86) der beiden Rollen (74, 76) ein minimaler Abstand besteht, und der Leitschlitz (90) einen im Wesentlichen vertikalen vorderen Endbereich aufweist, der mit einem bezogen auf eine angenommene Bewegung von Garn durch die Garnspanneinrichtung (64) allmählich nach hinten und oben ansteigenden Bereich verbunden ist.

4. Garnspanneinrichtung nach Anspruch 2 oder 3, **gekennzeichnet durch** ein Paar zumindest im Wesentlichen paralleler zwischen den Befestigungsplatten (66, 68) angeordneter Rollenplatten (70, 72), die jeweils im Wesentlichen kreisförmige Aussparungen (92) aufweisen, die gegenüberliegende Endbereiche der Wellen bzw. Achsen (86) der zweiten Rolle (76) aufnehmen und die erlauben, dass sich die Achse bzw. Welle (86) der zweiten Rolle (76) bezogen auf die Befestigungsplatten (66, 68) bewegen kann, und dass die Federanordnung (78) mit den Rollenplatte (70, 72) verbunden ist.

5. Garnspanneinrichtung nach einem oder mehreren der vorherigen Ansprüche, **dadurch gekennzeichnet, dass** die Federanordnung (78) eine Tragwelle (100), die mit den Befestigungsplatten (66, 68) an einer Stelle verbunden ist, welche der Welle bzw. Achse (86) der zweiten Rolle (76) bezogen auf die Welle bzw. Achse (84) der ersten Rolle (74) zumindest im Wesentlichen gegenüberliegt, und einen T-Bolzen (106) mit einem Schaft (108) aufweist, welcher sich senkrecht zu der Tragwelle (100) erstreckt und mit einem Kopf (110) mit gegenüberliegenden Endbereichen, welche in Aussparungen (112) in den Rollenplatten (70, 72) eingreifen, und dass die Federanordnung (78) zwischen der Tragwelle (100) und dem T-Bolzen (106) angeordnet ist, um die erste Rolle (74) in Richtung der zweiten Rolle (76) zu belasten.

6. Garnspanneinrichtung nach einem oder mehreren der vorherigen Ansprüche, **gekennzeichnet durch** eine Garnleiteinrichtung (124), welche zumindest im Wesentlichen mit einem Spalt zwischen den beiden Rollen (74, 76) fluchtet.

7. Garnspanneinrichtung nach Anspruch 5, **dadurch gekennzeichnet, dass** der T-Bolzen (106) bezogen auf die Tragwelle (100) verschiebbar angeordnet ist bzw. durch diese verschiebbar aufgenommen wird und dass die Federanordnung (78) eine mit dem T-Bolzen (106) zusammenwirkende Feder aufweist, welche vorzugsweise in der Art einer auf dem Schaft des T-Bolzens angeordneten Druckfeder (114) ausgebildet ist, die an dem Schaft (108) durch ein Sicherungsmittel (118) gesichert ist und die zwischen dem Sicherungsmittel (118) und der Tragwelle (100) angeordnet ist.

8. Ballenpresse, insbesondere Großballenpresse, mit einer Garnspanneinrichtung (64) nach einem oder mehreren der vorherigen Ansprüche.

## Claims

1. A twine tensioning device (64) of a baler, with at least one pair of ribbed rollers (74, 76), wherein a first roller (74) is made movable so that its axial spacing from the second roller (76) can alter, and with a spring arrangement (78) which applies a force to the first roller (74) which counteracts enlargement of the spacing between the first roller (74) and the second roller (76), **characterized by** an arrangement which so guides the first roller (74) that an enlargement of the spacing between the first roller (74) and the second roller (76) does not cause any appreciable alteration of the said force.

2. A twine tensioning device according to claim 1, **characterized in that** the arrangement comprises positionally fixed mounting plates (66, 68) with spaced, parallel regions with respective guide slots (90) which receive end regions of an axle or shaft (84) pertaining to the first roller (74), wherein the guide slots (90) are formed in such a way that they so guide the axle or shaft (84) that the first roller (74) can move away from the second roller (76).

3. A twine tensioning device according to claim 2, **characterized in that** the first roller (74) is arranged at least substantially vertically above the second roller (76) when a minimum spacing exists between the axles or shafts (84, 86) of the two rollers (74, 76), and the guide slot (90) comprises a substantially vertical front end region which is connected to a region gradually rising to the rear and above relative to an assumed movement of twine through the twine tensioning device (64).

4. A twine tensioning device according to claim 2 or 3, **characterized by** a pair of at least substantially parallel roller plates (70, 72) arranged between the mounting plates (66, 68), each having substantially circular openings (92) which receive opposite end regions of the shaft or axle (86) of the second roller (76) and which allow the axle or shaft (84) of the first roller (74)to move relative to the mounting plates (66, 68), and in that the spring arrangement (78) is connected to the roller plates (70, 72).

5. A twine tensioning device according to one or more of the preceding claims, **characterized in that** the spring arrangement (78) comprises a support shaft (100) which is connected to the mounting plates (66, 68) at a place which is at least substantially opposite the shaft or axle (86) of the second roller (76) relative to the shaft or axle (84) of the first roller (74), and a T-bolt (106) with a shank (108) which extends perpendicular to the support shaft (100) and with a head (110) with opposed end regions which engage in openings (112) in the roller plates (70, 72), and **in that** the spring arrangement (78) is arranged between the support shaft (100) and the T-bolt (106), in order to bias the first roller (74) in the direction of the second roller (76).

6. A twine tensioning device according to one or more of the preceding claims, **characterized by** a twine guide device (124) which is substantially aligned with a gap between the two rollers (74, 76).

7. A twine tensioning device according to claim 5, **characterized in that** the T-bolt (106) is movably arranged relative to the support shaft (100) or is movably arranged by it, and **in that** the spring arrangement (78) comprises a spring cooperating with the T-bolt (106) and which is preferably in the nature of a compression spring (114) arranged on the shank of the T-bolt and secured on the shank (108) by a securing means (118) and arranged between the securing means (118) and support shaft (100).

8. A baler, especially a large baler, with a twine tensioning device (64) according to one or more of the preceding claims.

## Revendications

1. Dispositif de tension de fil (64) dans une presse à balles, comportant au moins une paire de molettes (74, 76) nervurées, une première molette (74) étant prévue mobile, de manière à pouvoir faire varier sa distance axiale par rapport à la deuxième molette (76), et comportant un système de ressort (78) qui exerce sur la première molette (74) une force qui s'oppose à un agrandissement de la distance entre la première molette (74) et la deuxième molette (76), **caractérisé par** un dispositif qui guide la première molette (74) de telle sorte qu'un agrandissement de la distance entre la première molette (74) et la deuxième molette (76) n'engendre pas une variation notoire de ladite force.

2. Dispositif de tension de fil selon la revendication 1, **caractérisé en ce que** le dispositif comporte des plaques de fixation (66, 68) stationnaires, avec des zones parallèles espacées et munies de fentes de guidage (90), lesquelles zones d'extrémité reçoivent un axe ou arbre (84) associé à la première molette (74), les fentes de guidage (90) étant conçues de telle sorte qu'elles guident l'axe ou arbre (84) de telle sorte que la première molette (74) peut s'écarter de la deuxième molette (76).

3. Dispositif de tension de fil selon la revendication 2, **caractérisé en ce que** la première molette (74) est disposée au moins sensiblement verticalement au-dessus de la deuxième molette (76) lorsqu'il se forme un intervalle minimum entre les axes ou arbres (84, 86) des deux molettes (74, 76), et la fente de guidage (90) comporte une zone d'extrémité antérieure sensiblement verticale, qui est reliée à une zone ascendante progressivement vers l'arrière et le haut par rapport à un mouvement supposé du fil à travers le dispositif de tension de fil (64).

4. Dispositif de tension de fil selon la revendication 2 ou 3, **caractérisé par** une paire de plaques à molettes (70, 72) sensiblement parallèles, qui sont agencées entre les plaques de fixation (66, 68) et comportent chacune des évidements (92) sensiblement circulaires, qui reçoivent des extrémités opposées des arbres ou axes (86) de la deuxieme molette (76) et qui permettent que l'axe ou l'arbre (86) de la deuxieme molette (76) puisse se déplacer par rapport aux plaques de fixation (66, 68) et que le système de ressort (78) soit relié aux plaques à molettes (70, 72).

5. Dispositif de tension de fil selon une ou plusieurs des revendications précédentes, **caractérisé en ce que** le système de ressort (78) comporte un arbre de support (100), qui est relié aux plaques de fixation (66, 68) à un emplacement qui est situé au moins sensiblement en face de l'arbre ou de l'axe (86) de la deuxième molette (76) par rapport à l'arbre ou l'axe (84) de la première molette (74), et un boulon en T (106) avec une tige (108), qui s'étend perpendiculairement à l'arbre de support (100), et avec une tête (110) comportant des zones d'extrémité opposées qui s'engagent dans des évidements (112) dans les plaques à molettes (70, 72), et **en ce que** le système de ressort (78) est agencé entre l'arbre de support (100) et le boulon en T (106), afin de solliciter la première molette (74) vers la deuxième molette (76).

6. Dispositif de tension de fil selon une ou plusieurs des revendications précédentes, **caractérisé par** un dispositif de guidage du fil (124), qui est aligné au moins sensiblement avec une fente entre les deux molettes (74, 76).

7. Dispositif de tension de fil selon la revendication 5, **caractérisé en ce que** le boulon en T (106) est agencé mobile par rapport à l'arbre de support (100) ou est reçu de manière mobile à travers celui-ci et **en ce que** le système de ressort (78) comporte un ressort, qui coopère avec le boulon en T (106) et qui est conçu de préférence sous la forme d'un ressort de pression (114), qui est agencé sur la tige du boulon en T et fixé sur la tige (108) par un moyen de blocage (118) et est agencé entre le moyen de blocage (118) et l'arbre de support (100).

8. Presse à balles, en particulier presse à grandes balles, comportant un dispositif de tension de fil (64) selon une ou plusieurs des revendications précédentes.
